# EUROPÄISCHE PATENTSCHRIFT

(11) **EP 2 952 338 B1**
(45) Veröffentlichungstag und Bekanntmachung des Hinweises auf die Patenterteilung: **24.03.2021**
(21) Anmeldenummer: 15001606.1
(22) Anmeldetag: 29.05.2015
(51) Int. Cl.: B29C 70/88, B64D 45/02, D06M 11/00, B29B 15/08, C08J 5/06

(54) **VERFAHREN ZUM HERSTELLEN EINES BAUTEILS AUS FASERVERSTÄRKTEM VERBUNDMATERIAL, VORFORM UND HERSTELLVORRICHTUNG**
METHOD FOR PRODUCING A COMPONENT MADE OF FIBRE-REINFORCED COMPOSITE MATERIAL, PREFORM AND MANUFACTURING DEVICE
PROCÉDÉ DESTINÉ À LA FABRICATION D'UN COMPOSANT EN MATIÈRE COMPOSITE RENFORCÉE PAR DES FIBRES, PRÉFORME ET DISPOSITIF DE FABRICATION

(30) Priorität: 02.06.2014 DE 102014007824
(43) Veröffentlichungstag der Anmeldung: 09.12.2015
(73) Patentinhaber: Airbus Defence and Space GmbH, 82024 Taufkirchen (DE)
(72) Erfinder: Metzner, Christian, 85579 Neubiberg (DE); Beier, Uwe, 85635 Höhenkirchen (DE)
(74) Vertreter: Krebs, Jörg

(56) Entgegenhaltungen:
- WO-A1-93/15904
- WO-A2-2008/007140
- FR-A1- 2 988 639
- US-A- 4 522 889

## Beschreibung

Die Erfindung betrifft ein Verfahren zum Herstellen eines Bauteils aus faserverstärktem Verbundmaterial. Außerdem betrifft die Erfindung eine textile Vorform zur Herstellung eines solchen Bauteils sowie ein damit hergestelltes Bauteil selbst sowie ein damit versehenes Luftfahrzeug. Schließlich betrifft die Erfindung eine Vorrichtung zum Herstellen einer solchen textilen Vorform.

Bauteile aus faserverstärkten Kunststoffen, insbesondere CFK-Bauteile, werden im Fahrzeugbau, wie insbesondere im Bau von Luftfahrzeugen, zunehmend eingesetzt. Die größten Vorteile solcher Bauteile sind eine erhebliche Gewichtseinsparung, während gleichzeitig durch Anordnung von Fasern eine gezielte Festigkeit und ein gezieltes Verhalten unter Last erreicht werden kann.

Daher ist insbesondere in der Luftfahrt geplant, größere Strukturen in CFK-Bauweise einzusetzen.

Allerdings zeigen CFK-Strukturen im Vergleich zu metallischen Bauweisen aufgrund der Materialeigenschaften eine reduzierte Schadenstoleranz, Temperaturbeständigkeit sowie auch eine erheblich geringere elektrische Leitfähigkeit. Der Einsatz von CFK-Bauweisen in Oberflächenstrukturen von Luftfahrzeugen erfordert unter anderem auch einen wirksamen Schutz gegen Blitzeinschlag.

Zu der Problematik des Blitzeinschlages wird insbesondere auf die WO 2012/163325 sowie die darin zitierten Dokumente verwiesen.

Beispielsweise müssen, um den Anforderungen für Temperaturbeständigkeit und Blitzschutz gerecht zu werden, Metallgitter, wie z.B. Cu-Gitter, auf CFK-Rumpfoberflächen eingesetzt werden. Beispielsweise müssen Einbußen in Gewicht und Kosten durch Zusatzaufwände, wie z.B. einem Cu-Gitter, auf der CFK-Rumpfoberfläche im Airbus A350XWB akzeptiert werden. Ein derartiges Metallgitter kann bei Flugzeugen dieser Größenordnung ein Mehrgewicht von ca. 500 kg verursachen.

Es gibt unterschiedliche Ansätze, faserverstärkte Verbundbauteile und insbesondere CFK-Strukturen hinsichtlich der Schadenstoleranz, Temperaturbeständigkeit und Blitzschutz bzw. elektrische Leitfähigkeit zu verbessern.

Zur Vergrößerung der Schadenstoleranz schlägt beispielsweise die EP 1 473 132 A2 die Einbringung von zähen Zwischenlagen und somit ein zäh modifiziertes Harzsystem vor. Andere Lösungsansätze hierzu sind strukturelle Anpassungen des Designs, was aber erhöhten Entwicklungsaufwand bedarf.

Zur Verbesserung der elektrischen Leitfähigkeit sind beispielsweise Cu-Gitter auf der Oberfläche (siehe hierzu beispielsweise der in der WO 2012/163325 zitierte Stand der Technik), die Verwendung von metallisierten Fasern zur Herstellung von Zwischenlagen (US 2010/0264266 A1) oder die Verwendung metallisierter Kohlenstofffasern (US 4481249 A) bekannt. In der DE 10 2006 046 002 B4 oder der WO 2012/163325 werden zur Verbesserung der Leitfähigkeit zwecks Verbesserung des Blitzschutzes leitfähige Zuschlagstoffe wie z.B. Nanopartikel oder Metallpartikel vorgeschlagen.

Aus der WO93/15904 A1 ist ein Verfahren zur Herstellung einer Verbundstruktur aus metallisierten Fasern in Polymermatrix bekannt, bei dem zunächst eine textile Vorform aus Fasermaterial zugeschnitten und nahe der später erwünschten Endkontur geformt wird. Die Fasern, die die Vorformen bilden, umfassen warmformbare, als Bindemittel wirkende Kunstharze, um eine Formbeständigkeit der in Gestalt gebrachten Vorform zu erzielen. Somit wird die entsprechend vorgeformte Vorform mittels warmformbaren Kunstharzen als zusätzliches Bindemittel fixiert. Die so fixierte Vorform wird anschließend einem Metallisierungsprozess durch ein PVD-Verfahren oder einem stromlosen nasschemischen Prozess unterzogen. Anschließend wird mit Hilfe der so metallisierten vorgeformten Vorform ein RTM-Verfahren zum Herstellen des Bauteils aus metallisierten Fasern in Polymer-matrix durchgeführt.

Aus der FR 2988 639 A ist ein Verfahren zur Herstellung von Verbundmaterialien aus trockenen Fasern bekannt, wobei ein Lage aus unidirektionalen Kohlenstofffasern mit wenigstens einer elektrisch leitfähigen Komponente verbunden wird. Die leitfähige Komponente kann in Form von Partikeln, Kurzfasern oder Garnen vorliegen. Bei einer Implementierung wird hierzu die Lage aus undirektionalen Kohlenstofffasern mit einer Schicht aus thermoplastischem oder thermisch aushärtendem Material versehen, wobei die leitfähige Komponente zusätzlich aufgebracht wird. Es wird ausgeführt, dass hierzu die Schicht oder die Lage metallisiert werden kann; und dass dies auch in Mustern erfolgen kann. In einem konkreten Beispiel wird ein PET-Web mit Nickel beschichtet und dann thermisch mit der Lage aus unidirektionalen Fasern verbunden. Der so gebildete Lagenverbund wird als Verstärkungslage für die Herstellung von Verbundmaterialien mit Blitzschutz verwendet.

Aus der DE 10 2007 004 314 A1 ist bei der Herstellung von faserverstärkten Bauteilen für Luftfahrzeuge der Einsatz eines Doppeldiaphragmaverfahrens bekannt. Aus der WO2008/007140 A2 ist es bekannt, ein Prepreg, also ein bereits mit Matrixmaterial vorimpregniertes Fasergewebe, auf einer konvexen Form zu formen und dort unter Anwendung eines Diaphragmas oder eines Doppeldiaphragmas zu kompaktieren.

Aus der US 4 522 889 A ist es bekannt, unterschiedliche Gewebe aus Verstärkungsfasern für die Herstellung von Verbundmaterialien in Metallisierungsbädern zu metallisieren.

Die Erfindung hat sich zur Aufgabe gestellt, ein Verfahren sowie eine Vorform zur Herstellung von Bauteilen aus faserverstärkten Verbundmaterialien, insbesondere CFK-Strukturen, zu schaffen, die hinsichtlich Schadenstoleranz, Temperaturbeständigkeit und auch der elektrischen Leitfähigkeit verbessert sind.

Zum Lösen dieser Aufgabe wird ein Verfahren gemäß Anspruch 1, eine metallisierte textile Vorform nach Anspruch 8 und eine Vorrichtung nach Anspruch 12 vorgeschlagen. Weiter schlägt die Erfindung ein damit herstellbares Bauteil nach Anspruch 9, insbesondere für ein Luftfahrzeug nach Anspruch 10 vor.

Vorteilhafte Ausgestaltungen der Erfindung sind Gegenstand der Unteransprüche.

Gemäß einem ersten Aspekt schafft die Erfindung ein Verfahren nach Anspruch 1 zum Herstellen eines Bauteils aus faserverstärktem Verbundmaterial, mit der folgenden Reihenfolge von Schritten:
a) Herstellen einer textilen Vorform aus Fasermateriallagen,
b) Vorformen und Lagefixieren der textilen Vorform entsprechend der in dem Bauteil erwünschten Endkontur mittels eines Formwerkzeuges,
c) Metallisieren der in Schritt a) hergestellten textilen Vorform zum Beschichten einer Faseroberfläche des Fasermaterials der textilen Vorform mit einer Metallschicht, während die Vorform an dem Formwerkzeug gehalten wird, und
d) Imprägnieren der metallisierten textilen Vorform mit Matrixmaterial und Aushärten.

Dabei umfasst Schritt c): Stabilisieren und/oder Fixieren von Lagen in der vorgeformten textilen Vorform durch die Metallisierung.

Es ist bevorzugt, dass Schritt a) umfasst:
a1) Zuschneiden und Drapieren von aus Fasermaterial bestehenden Flächengebilden zum Herstellen der textilen Vorform.

Es ist bevorzugt, dass Schritt a) umfasst:
a2) Herstellen der textilen Vorform unmittelbar aus Rovings.

Es ist bevorzugt, dass Schritt a) umfasst:
a3) Flechten von Rovings oder Fasersträngen zum Herstellen der textilen Vorform,

Es ist bevorzugt, dass Schritt a) umfasst:
a4a) Weben von Rovings oder Fasersträngen zum Herstellen der textilen Vorform. oder von Flächengebilden

Es ist bevorzugt, dass Schritt a) umfasst:
a4b) Weben von Rovings oder Fasersträngen zum Herstellen von Flächengebilden und Zuschneiden und Drapieren von Flächengebilde zum Herstellen der textilen Vorform.

Es ist bevorzugt, dass Schritt a) umfasst:
a5) Herstellen der textilen Vorform durch automatisiertes Verlegen von Fasern oder von Faserbandstücken.

Hierzu werden vorzugsweise FPP-Verfahren (Fiber-Patch-Placement-Verfahren, siehe WO2008/110614A1 für weitere Einzelheiten) oder AFP-Verfahren (Automatic Fibre Placement-Verfahren) durchgeführt.

Es ist bevorzugt, dass Schritt a) umfasst:
a6) Verwenden eines vormetallisierten Fasermaterials zum Herstellen der textilen Vorform.

Es ist bevorzugt, dass Schritt b) umfasst:
b1) Einlegen der Vorform in eine Kavität mit wenigstens einer Formfläche zur Fixierung der Vorform.

Es ist bevorzugt, dass Schritt b) umfasst:
b2) Stützen der Vorform mit einem formenden Stützwerkzeug.

Es ist bevorzugt, dass Schritt b) umfasst:
b3) Formen der Vorform in einem Einfachdiaphragmaverfahren oder Doppeldiaphragmaverfahren.

Es ist bevorzugt, dass Schritt c) umfasst:
c1) Galvanisieren der Vorform.

Es ist bevorzugt, dass Schritt c) umfasst:
c2) Eintauchen der in einer offenen Kavität eines Formwerkzeugs gehaltenen textilen Vorform in einem metallisierenden Tauchbad.

Es ist bevorzugt, dass Schritt c) umfasst:
c3) Spülen der textilen Vorform in einer geschlossenen Kavität eines Formwerkzeugs (54) mit einer metallisierenden Spülflüssigkeit.

Es ist bevorzugt, dass Schritt c) umfasst:
c4.1) Metallisieren der textilen Vorform, während sie in einem Einfachdiaphragmawerkzeug gehalten wird.

Es ist bevorzugt, dass Schritt c) umfasst:
c4.2) Metallisieren der textilen Vorform, während sie in einem Doppeldiaphragmawerkzeug gehalten wird.

Es ist bevorzugt, dass Schritt c) umfasst:
c5) Spülen der einseitig oder doppelseitig durch ein Diaphragma gehaltenen textilen Vorform in einer geschlossenen Kavität eines mit wenigstens einer Diaphragma versehenen Formwerkzeug mit einer metallisierenden Spülflüssigkeit.

Es ist bevorzugt, dass Schritt c) umfasst:
c6) Ausbilden einer Metallschicht zwischen einer Formfläche eines Formwerkzeuges und einer daran gehaltenen textilen Vorform.

Es ist bevorzugt, dass Schritt c) umfasst:
c7) Steuern der Dicke einer Metallschicht zwischen einer Formfläche eines Formwerkzeuges und einer daran gehaltenen textilen Vorform durch Steuern eines elektrochemischen Metallisierungsprozesses, z.B. durch Steuern eines Galvanisierens.

Es ist bevorzugt, dass Schritt c) umfasst:
c8) Aufbringen eines vorbestimmten Musters aus Metallbahnen oder Metallbereichen auf die textile Vorform.

Es ist bevorzugt, dass Schritt c) umfasst:
c9) Verwenden einer Formoberfläche mit einem vorbestimmten Muster aus leitfähigen und nichtleitfähigen Bereichen zum Aufbringen eines vorbestimmten Musters aus Metallbahnen oder Metallbereichen mittels eines elektrochemischen Metallisierungsverfahrens auf die textile Vorform.

Es ist bevorzugt, dass Schritt c) umfasst:
Spülen der in einer geschlossenen Kavität eines Formwerkzeugs gehaltenen textilen Vorform mit einer metallisierenden Spülflüssigkeit.

Es ist bevorzugt, dass Schritt a) umfasst: Herstellen der Preform unter Verwendung von Kohlenstofffasern.

Es ist bevorzugt, dass Schritt d) umfasst: Imprägnieren der textilen Vorform mit Harz.

Es ist bevorzugt, dass Schritt d) umfasst: Imprägnieren der textilen Vorform mit einer polymerbasierten Matrix.

Gemäß einem weiteren Aspekt schafft die Erfindung eine entsprechend der Endkontur vorgeformte metallisierte textile Vorform nach Anspruch 8, umfassend eine erste Lage aus einem ersten textilen Fasergelege und eine zweite Lage aus einem zweiten textilen Fasergelege und eine sowohl die Faseroberfläche des ersten Fasergeleges als auch die Faseroberfläche des zweiten Fasergeleges umgebenden gemeinsamen Metallschicht, wobei die gemeinsame Metallschicht das erste Fasergelege und das zweite Fasergelege aneinander fixiert.

Die Fasern der ersten und zweiten Fasergelege sind z.B. in unterschiedlicher Richtung orientiert und durch die Metallschicht aneinander fixiert.

Es ist weiter vorgesehen, dass die metallisierte textile Vorform eine durchgehende Metallschicht an ihrer Oberfläche aufweist.

Alternativ oder zusätzlich ist vorgesehen, dass die metallisierte textile Vorform ein Muster aus Metallbahnen und/oder Metallschichtbereichen auf ihrer Oberfläche aufweist.

Gemäß einem weiteren Aspekt schafft die Erfindung ein Bauteil aus faserverstärktem Verbundmaterial, umfassend eine derartige textile Vorform.

Das Bauteil ist vorzugsweise ausgebildet als Bauteil eines Luftfahrzeuges. Gemäß einem weiteren Aspekt schafft die Erfindung ein Luftfahrzeug, umfassend ein solches Bauteil.

Gemäß einem weiteren Aspekt schafft die Erfindung eine Vorrichtung nach Anspruch 12 zur Herstellung einer metallisierten textilen Vorform nach einer der zuvor erläuterten Ausgestaltungen und/oder zur Verwendung in einem Verfahren nach einer der zuvor erläuterten Ausgestaltungen und/oder zur Herstellung einem Bauteil nach einer der zuvor erläuterten Ausgestaltungen, wobei die Vorrichtung umfasst: ein Formwerkzeug zum Formen und Stützen einer noch unmetallisierten textilen Vorform und

eine Metallisierungseinrichtung zum Metallisieren der in oder an dem Formwerkzeug gehaltenen textilen Vorform.

Es ist bevorzugt, dass das Formwerkzeug wenigstens ein Diaphragma zur Bereitstellung einer Formoberfläche aufweist.

Es ist bevorzugt, dass das Formwerkzeug eine mit einem Muster aus leitfähigen und nichtleitfähigen Bereichen versehene Formoberfläche aufweist.

Ausführungsbeispiele der Erfindung werden nachfolgend anhand der beigefügten Zeichnungen näher erläutert. Darin zeigt:
- Fig. 1: einen Ausschnitt eines Bauteils aus CFK-Material gemäß der üblichen CFK-Herstellweise;
- Fig. 2: eine Ansicht vergleichbar von Fig. 1 eines weiteren Bauteils, das nach einer bekannten Technologie hergestellt worden ist;
- Fig. 3: eine schematische Darstellung eines ersten Schritts einer Herstellung einer textilen Vorform;
- Fig. 4: eine schematische Darstellung eines zweiten Schritts zum Herstellen der Vorform;
- Fig. 5: eine schematische Darstellung der mit den Schritten gemäß Fig. 1 und Fig. 2 hergestellten Vorform;
- Fig. 6: eine vergrößerte schematische Darstellung von Berührungspunkten zwischen Fasern der Vorform von Fig. 5;
- Fig. 7: ein Detail der Vorform von Fig. 5;
- Fig. 8: einen weiteren Schritt zur Herstellung eines CFK-Bauteils aus der gemäß den Schritten von Fig. 3 und Fig. 4 hergestellten Vorform;
- Fig. 9: eine schematische Darstellung des mit dem Herstellschritt von Fig. 8 hergestellten CFK-Bauteils;
- Fig. 10: eine schematische Darstellung einer ersten Ausführungsform einer Vorrichtung zur Herstellung einer metallisierten textilen Vorform;
- Fig. 11: eine schematische Darstellung einer zweiten Ausführungsform einer Vorrichtung zur Herstellung einer metallisierten textilen Vorform; und
- Fig. 12: eine Draufsicht auf eine Formoberfläche eines Formwerkzeugs der Vorrichtung nach Fig. 11.

Im Folgenden werden unterschiedliche Ausgestaltungen von Verfahren zum Herstellen eines Bauteiles 10 aus faserverstärktem Verbundmaterial näher erläutert. Das Bauteil 10 ist in den dargestellten Ausführungsformen ein Teil einer CFK-Struktur 12, die insbesondere als Oberflächenstruktur 14 eines Rumpfes eines Luftfahrzeuges 16 zum Einsatz kommen soll.

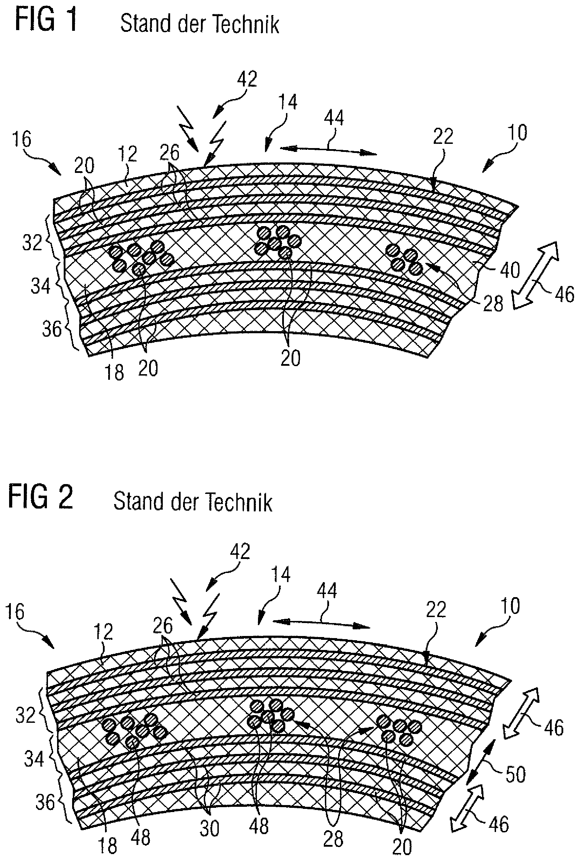

Fig. 1 zeigt den üblichen klassischen Aufbau von derartigen CFK-Strukturen 12 nach der für derartige Strukturen gebräuchlichen Herstellweise. Demnach ist das Bauteil 10 mit in einer Matrix 18 eingebetteten Fasern 20 zur Verstärkung - Verstärkungsfasern - versehen.

Zur Herstellung wird üblicherweise derart vorgegangen, dass die Fasern 20 in Form einer Vorform 22, beispielsweise als Preform 24, hergestellt werden.

Hierzu werden einzelne Flächengebilde 26, 28, 30, die beispielsweise aus Fasergeweben gebildet sind, zu mehreren Lagen zusammengefügt. Die einzelnen Fasern der Flächengebilde 26, 28, 30 in den unterschiedlichen Lagen 32, 34, 36 müssen vorfixiert werden, wozu zusätzliche Bindersysteme notwendig sind, bevor in einem Formwerkzeug eine Imprägnierung der Vorform 22 mit dem Matrixmaterial erfolgt. Im Ergebnis erhält man das in Fig. 1 dargestellte Bauteil 10.

Zur Herstellung von derartigen CFK-Strukturen in Harzimprägniertechnik erfolgt z.B. eine RTM-Technik mit Epoxydharz. Hierzu sind Binder zur Stabilisierung der Fasern in endkonturnaher Geometrie erforderlich. Einige Bindersysteme - z.B. bei Verwendung von polyamid-basierten Vliesen - bewirken im ausgehärteten Bauteil 10 der CFK-Struktur 12 erheblich reduzierte matrixdominierte Kennwerte, wie z.B. erheblich reduzierte interlaminare Schubfestigkeit/Steifigkeit oder auch Druckfestigkeit.

Die Schadenstoleranz derzeitiger CFK-Laminate mit Epoxydmatrix ist im Vergleich zu Metall erheblich geringer, da die verwendeten Harzsysteme relativ spröde sind - spröde Harzmatrix 40 - und da die CFK-Werkstoffe grundsätzlich stark heterogen sind. Es gibt hohe Steifigkeitssprünge zwischen den Fasern 12 und der Matrix 18; die Steifigkeit zwischen diesen Materialien 20, 18 unterscheidet sich ca. um einen Faktor 100.

Die elektrische Leitfähigkeit ist im Vergleich zu Metall um ein Vielfaches geringer, da die verwendeten Materialien in CFK-Strukturen 12 höhere elektrische Widerstände aufzeigen. Die Kohlenstofffasern 20 weisen beispielsweise einen elektrischen Widerstand von 1,6 x 10⁻³ Ohm x cm auf, das Epoxydharz weist einen elektrischen Widerstand von ca. 1 x 10¹⁵ Ohm x cm auf, wohingegen Stahl einen elektrischen Widerstand von 8 x 10⁻⁵ Ohm x cm aufweist.

Demnach weist die CFK-Struktur 12 gemäß dem in Fig. 1 dargestellten Stand der Technik ein hohes Risiko beim Einschlagen von Blitzen 42 auf, die elektrische Leitfähigkeit 44 in Flächenrichtung ist sehr gering, und es gibt einen extrem hohen elektrischen Widerstand 46 in Dickenrichtung.

Bei der Herstellung im Fertigungsprozess ist bei dem bekannten Verfahren eine zusätzliche Stabilisierung der Fasern 20 erforderlich, wozu zusätzliche Bindersysteme benötigt werden. Die zusätzlichen Binder sind jedoch negativ für die mechanischen Eigenschaften. Insbesondere reduzieren thermoplastische Binder die Hot-Wet-Eigenschaften der CFK-Struktur 12.

Aufgrund der heterogenen Materialeigenschaften und dem spröden Harz 40 gibt es eine geringe Schadenstoleranz, so dass zusätzliche Zähmacher erforderlich sind.

Es gibt eine limitierte Leitfähigkeit 44 in Faserlängsrichtung und nahezu keine Leitfähigkeit in Dickenrichtung - hoher Widerstand 46. Deswegen sind zusätzliche Maßnahmen für Blitzschutz erforderlich.

Es ist aber auch bereits die Verwendung von metallisierten Fasern 48 für Zwischenlagen - zweite Lage 34 - der CFK-Struktur 12 vorgeschlagen worden. Eine solche Lösung ist in Fig. 2 skizziert.

Auch hier ist jedoch ein zusätzlicher Binder zur Stabilisierung der textilen Vorform 22 erforderlich. Nur in der Zwischenlage - zweite Lage 34 - gibt es eine verbesserte elektrische Leitfähigkeit 50; dennoch ist der Widerstand 46 in Dickenrichtung des CFK-Laminats sehr groß. Auch ist die Leitfähigkeit 44 in Faserlängsrichtung gering. Zwar ist die Schadenstoleranz gegenüber der in Fig. 1 gezeigten Lösung etwas verbessert; lässt jedoch weiterhin zu wünschen übrig.

Zur Lösung wird hier vorgeschlagen, anstelle der bekannten textilen Vorformen 22 gemäß dem Stand der Technik eine metallisierte textile Vorform 52 herzustellen. Grundidee ist dabei, die Metallisierung erst nach grundsätzlicher, vorgefertigter Herstellung der textilen Vorform 22 zu metallisieren.

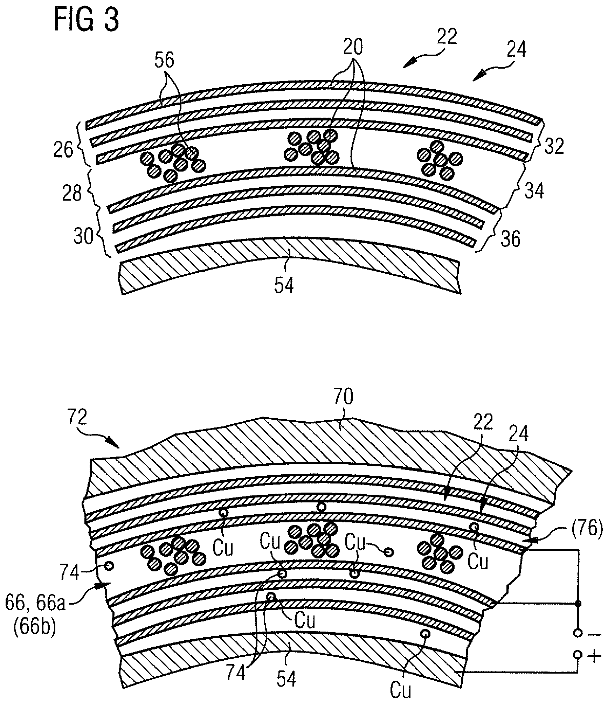

Dies wird im Folgenden anhand der Darstellungen in den Fig. 3 und 4 erläutert. Bei den in den Fig. 3 und 4 skizzierten Verfahrensschritten wird auf die Faseroberfläche der textilen Vorform 22 eine dünne Metallschicht appliziert, während die textile Vorform 22 endkonturnah durch ein Formwerkzeug 54 gehalten wird.

In Fig. 3 wird auf einem Formwerkzeug 54 eine textile Vorform 22 durch irgendein zum Herstellen einer solchen textilen Vorform 22 geeignetes Verfahren hergestellt.

Beispielsweise kann die textile Vorform 22 durch Aufbringen mehrerer Lagen 32, 34, 36 aus zugeschnittenen und drapierten Flächengebilden 26, 28, 30 hergestellt werden.

Weitere Beispiele zum Bilden einer textilen Vorform sind unmittelbares Herstellen der textilen Vorform 22 aus einzelnen Fasersträngen, wie z.B. Kohlenstoff-Rovings 56. Beispielsweise können hierzu die Rovings 56 gewebt werden, um die textile Vorform 22 zu erhalten.

Auch grundsätzlich bekannte AFP-Verfahren (automatisches Fiber-Placement-Verfahren, siehe z.B. EP 0 491 353 A1) oder ein FPP-Verfahren (siehe z.B. WO 2008/110614 A1) können eingesetzt werden.

Vorteilhaft wird die als Preform 24 ausgebildete textile Vorform 22 bereits auf einem unteren Formwerkzeug 54 derart vorgeformt hergestellt, dass bereits die später in dem Bauteil 10 gewünschte Faserstruktur bereits möglichst nahe abgebildet ist.

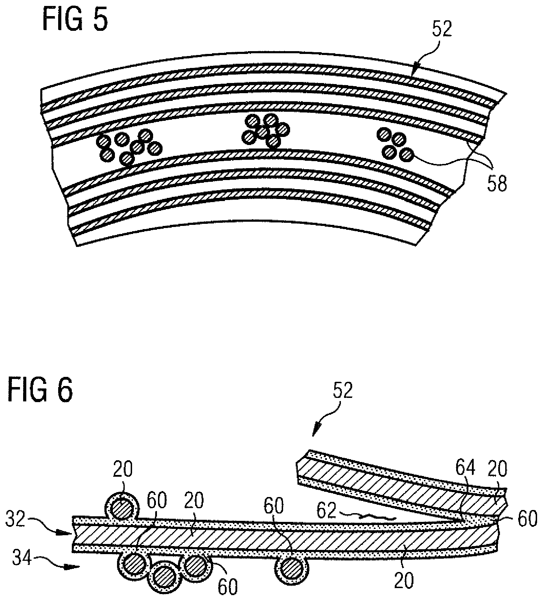

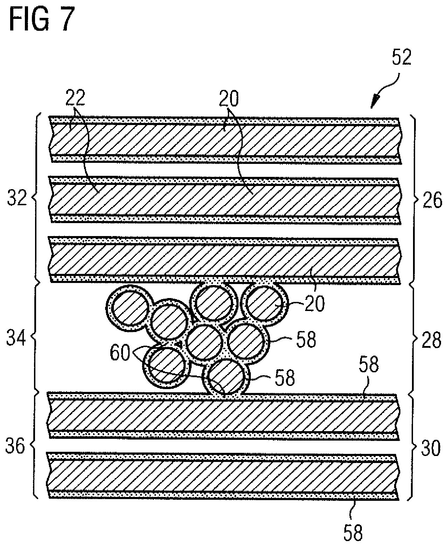

Die durch das Formwerkzeug 54 gestützte textile Vorform 22 wird anschließend dem in Fig. 4 angedeuteten Galvanisierungsprozess unterworfen. Dabei werden die Faseroberflächen der textilen Vorform 22 mit einer Metallschicht 58 versehen, wie dies in Fig. 5 erläutert ist. Die Fig. 6 und 7 zeigen Details der metallisierten Fasern 48, die durch das hier beschriebene Verfahren einer Metallisierung der bereits vorgefertigten textilen Vorform 22 erreichbar ist.

Durch ein Metallisieren, z.B. Galvanisieren, während die textile Vorform 22 endkonturnah durch ein Werkzeug 54 gehalten wird, bildet sich die Metallschicht 58 auf der Faseroberfläche der gesamten textilen Vorform 22 auf. In Bereichen, wo sich die Fasern 20 einander berühren, wirkt die Metallschicht 58 als Fixierung.

Hierzu werden die Fasern 20 untereinander durch die Metallisierung fixiert. Auch werden die Fasern der unterschiedlichen Lagen 32, 34, 36 miteinander verbunden und aneinander fixiert.

Demnach weist das hier interessierende Verfahren in Fig. 3 einen Schritt eines Herstellens einer textilen Vorform 22, dann einen in Fig. 4 angedeuteten Schritt des Metallisierens der vorgefertigten textilen Vorform 22 auf. Anschließend wird die dadurch erhaltene metallisierte textile Vorform 52 in vergleichbarer Weise wie im Stand der Technik verwendet, es erfolgt ein Imprägnieren mit Matrix 18 und ein Aushärten gemäß dem Standardprozess. Als Matrix 18 kommt hierbei eine polymerbasierte Matrix zum Einsatz.

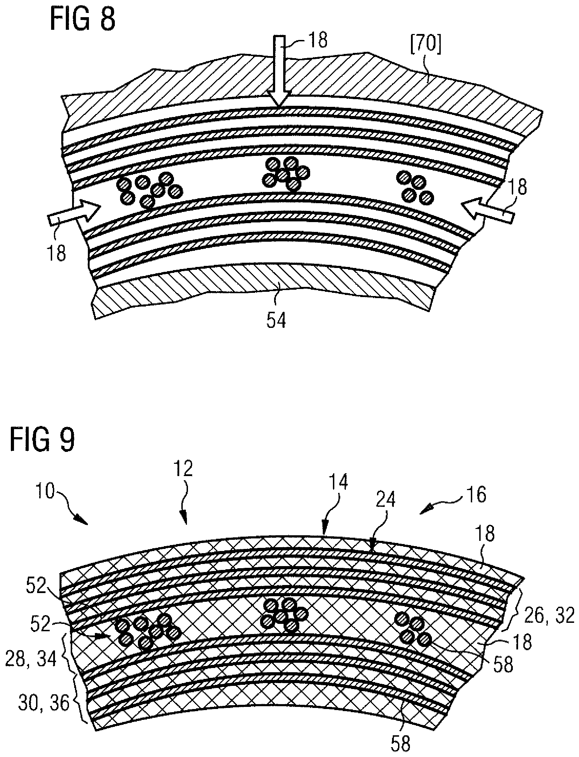

Dadurch erhält man ein CFK-Bauteil 10 aus Verstärkungsfasern mit durchgehender Metallschicht 58 und Matrix 18 zum Stützen der Fasern 20. Der Prozess des Imprägnierens der metallisierten textilen Vorform 52 ist in Fig. 8 angedeutet, während das fertige Bauteil 10 in Fig. 9 gezeigt ist.

Dadurch ist ein einfaches Stabilisieren und Fixieren der Fasern 20 der textilen Vorform 22, insbesondere der textilen Preform 24, endkonturnah in definierter Geometrie erreichbar. Als fertig infusioniertes Bauteil 10 ergibt sich eine Erhöhung der elektrischen Leitfähigkeit in alle Richtungen, wegen der durchgehenden Metalloberfläche auf den Fasern 20 und auch an deren Kontaktstellen 60.

An den Kontaktstellen 60 wirkt die Metallschicht 58 auch als Stabilisierung und Fixierung der Fasern 20.

Beginnenden Rissen 62 wird ein erhöhter Risswiderstand 64 entgegengesetzt, siehe Fig. 6 und 7.

Durch die Dazwischenfügung einer Metallschicht 58 zwischen die Fasern 20 und die Matrix 18 ergibt sich eine stark verbesserte interlaminare Schubfestigkeit und Risszähigkeit und somit auch eine verbesserte Schadenstoleranz.

Auch bei erhöhten Temperaturen und bei erhöhter Feuchte sind keine Delaminationen oder Abfälle - wie beim Einsatz von thermoplastischen Bindern oder dergleichen - zu erwarten.

Insbesondere werden hier metallbeschichtete textile Gebilde zur Optimierung der Materialeigenschaften von CFK-Strukturen 12, insbesondere zur Verwendung als Bauteil 10 eines Luftfahrzeuges 16 vorgeschlagen. Die CFK-Struktur 12 kann auch als Oberflächenstruktur 14 eines Luftfahrzeuges 16, beispielsweise eine Haut eines Rumpfes, verwendet werden.

Die Metallschicht 58 kann zur Stabilisierung der Fasern 20 verwendet werden. Es ergibt sich eine stark verbesserte elektrische Leitfähigkeit wegen der durchgehenden Metallschicht 58. Es sind erhöhte interlaminare Kennwerte (ILSS, Glc, Gllc) zu verzeichnen, so dass eine erhöhte Schadenstoleranz gegeben ist.

Im Gegensatz zu bisher bekannten CFK-Strukturen 12 basierend auf thermoplastischen Bindern ergibt es keine reduzierten Hot-Wet-Kennwerte, da Metalle kein nennenswertes Erweichen bei T_{service} < 135 °C zeigen, siehe hierzu z.B. http://www.engineeringtoolbox.com/young-modulus-d_773.html.

Insbesondere wird die Verwendung einer galvanisierten Metallschicht 58 auf der Faseroberfläche einer textilen Vorform 22 zur Stabilisierung der textilen Vorform 22 bzw. auch zur Modifikation der Materialeigenschaften und mechanischen Eigenschaften im imprägnierten und ausgehärteten Bauteil 10 vorgeschlagen.

Im Folgenden werden einige Beispiele zur möglichen Herstellungsweise zwecks Applikation der Metallschicht 58 erläutert.

### Herstellungsprozess 1:

1. Schritt:
   Herstellung der textilen Vorform 22, z.B. aus zugeschnittenen und drapierten Flächengebilden 26, 28, 30 (z.B. Gewebe) oder direkt aus den Rovings 56 (z.B. mittels Flechten).
2. Schritt:
   Einlegen der Vorform 22 in eine offene Kavität 66a, um die textile Vorform 22 nahe der Endkontur (Kontur der Vorform 22, wie sie in dem Bauteil 10 zu verwenden ist) zu fixieren.
3. Schritt:
   Galvanisieren in einem Tauchbad, um die Metallschicht 58 zu applizieren.
4. Schritt:
   Imprägnieren mit polymerbasierter Matrix 18 und Aushärten gemäß Standardprozess.

In Fig. 4 ist die Kavität 66 zwischen dem Formwerkzeug 54 und einem Deckel 70 angedeutet. Die Kavität 66 kann eine offene Kavität 66a sein, um das aus Deckel 70 und Formwerkzeug 54 gebildete Stützwerkzeug 72 in ein Tauchbad mit Metalllösung zum Galvanisieren zu tauchen.

Anstelle dessen kann das Stützwerkzeug 72 mit dem Deckel 70 und dem Formwerkzeug 54 auch eine geschlossene Kavität 66b bilden, wobei die Metalllösung 74 nicht mit einem Tauchbad, sondern als Spülflüssigkeit 76 genutzt wird.

Dann ergibt sich folgender weiterer beispielhafter Herstellungsprozess 2:

### Herstellungsprozess 2:

1. Schritt:
   Herstellung der textilen Vorform 22, z.B. aus zugeschnittenen und drapierten Flächengebilden 26, 28, 30 (z.B. Gewebe) oder direkt aus den Rovings 56 (z.B. mittels Flechten).
2. Schritt:
   Einlegen der Vorform 22 in eine geschlossene Kavität 66b, um Vorform 22 nahe der Endkontur zu fixieren.
3. Schritt:
   Galvanisieren durch Spülen der Vorform mit Metalllösung 74, um die Metallschicht 58 zu applizieren.
4. Schritt:
   Imprägnieren mit polymerbasierter Matrix 18 und Aushärten gemäß Standardprozess.

Zum Stabilisieren der textilen Vorform 22 vor der Metallisierung ist es aber nicht unbedingt und in jedem Fall erforderlich, ein Formwerkzeug 54 zu verwenden. Beispielsweise kann eine Stabilisierung der textilen Vorform 22 auch durch zusätzliche Bindersysteme erfolgen, wobei aber weiterhin das Metallisieren der Vorform an den entsprechend lagefixierten Fasern 20 der bereits hergestellten textilen Vorform 22 erfolgt.

Demnach lässt sich folgender Herstellungsprozess 3 als weiteres Beispiel anführen.

### Herstellungsprozess 3:

1. Schritt:
   Herstellung der textilen Vorform 22, z.B. aus zugeschnittenen und drapierten Flächengebilden 26, 28, 30 (z.B. Gewebe) oder direkt aus den Rovings 56 (z.B. mittels Flechten) inklusive Stabilisieren der Fasern 20 mit zusätzlichen Bindersystemen (z.B. PA-Vliese, Epoxy-Pulverbinder usw.). Dies entspricht der Herstellung einer textilen Vorform 22 nach bereits bisher bekannten Verfahren, einschließlich Stabilisierung der Fasern.
2. Schritt:
   Galvanisieren der beispielsweise als Preform 24 ausgebildeten textilen Vorform 22 ohne Stützwerkzeug in Tauchbad oder durch Spülen in geschlossener Kavität, um die Metallschicht zu applizieren.
3. Schritt:
   Imprägnieren mit polymerbasierter Matrix 18 und Aushärten gemäß Standardprozess.

Es kann aber auch bereits eine vorherige Metallisierung einzelner Flächengebilde 26, 28, 30 oder deren Fasern 20 erfolgen. Auch mit derartigen vormetallisierten Flächengebilden lässt sich das hier interessierende Verfahren durchführen.

Hierzu ist folgender Herstellungsprozess 4 als Beispiel zu nennen.

### Herstellungsprozess 4:

1. Schritt:
   Herstellung der textilen Vorform 22, z.B. aus zugeschnittenen und drapierten Flächengebilden 26, 28, 30, welche bereits durch Galvanisieren mit einer Metallschicht versehen wurden (z.B. Gewebe, Multiaxialgelege, Geflechte, usw.).
2. Schritt:
   Galvanisieren der so hergestellten textilen Vorform 22 durch Spülen der Vorform 22 mit Metalllösung, um die Metallschicht 58 zu applizieren.
3. Schritt:
   Imprägnieren mit polymerbasierter Matrix 18 und Aushärten gemäß Standardprozess.

Bei allen beispielhaften Herstellprozessen wird zunächst eine textile Vorform 22 hergestellt, wobei bereits eine Vorformung in Abhängigkeit von der späteren gewünschten Kontur innerhalb des Bauteiles 10 erfolgt. Erst anschließend erfolgt die Metallisierung, so dass die Metallschichten 58 nicht nur jeweils um Einzelfasern herum angebracht werden, sondern um die gesamte Oberfläche der Fasern 20 der Preform 24, wobei insbesondere auch die Kontaktstellen 60 mit der Metallschicht 58 überzogen werden. Hierdurch ergeben sich metallisierte Kontaktstellen 60, die sowohl elektrisch leitend wirken als auch fixierend wirken, zwischen den einzelnen Fasern 20 der Flächengebilde 26, 28, 30, aber auch zwischen den Fasern 20 der unterschiedlichen Lagen 32, 34, 36.

Die dargestellten Herstellprozesse können auch in einem Doppeldiaphragmaprozess oder auch in einem Prozess mit nur einem einfachen Diaphragma durchgeführt werden.

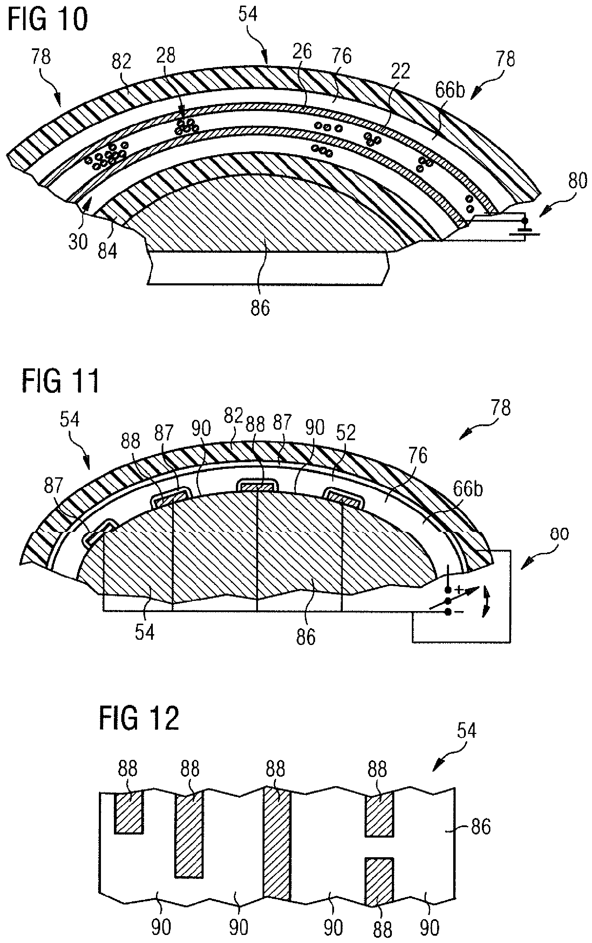

Fig. 10 zeigt in einer Schnittdarstellung eine Ausführungsform einer Vorrichtung 78 zur Herstellung der metallisierten textilen Vorform 52 mit einem Formwerkzeug 54, welches ein erstes Diaphragma 82 und ein zweites Diaphragma 84 aufweist, und einer Metallisierungseinrichtung 80.

Demnach hat das Formwerkzeug 54 zwei gegenüberliegende elastische Membrane - Diaphragmen 82, 84 - z.B. aus Gummi, Silikon oder dergleichen. Die noch unmetallisierte Preform 24 oder die sonstige textile Vorform 22 wird in den Zwischenraum zwischen den Diaphragmen 82, 84 gelegt; außerdem befindet sich in diesem Zwischenraum eine metallisierende Spülflüssigkeit 76. Der Zwischenraum wird ansonsten evakuiert, so dass die textile Vorform 22 zwischen den Diaphragmen 82, 84 fixiert wird.

Anschließend wird das Formwerkzeug 54 z.B. auf einen Stahltisch gelegt, auf dem sich eine Negativform 86 befindet. Der Raum zwischen dem auf der Negativform 86 angreifenden Diaphragma 84 und der Negativform wird evakuiert, so dass sich die Doppeldiaphragmastruktur mit der textilen Vorform dazwischen an die Kontur der Negativform 86 anpasst.

Die Metallisierungseinrichtung 80 umfasst eine Einrichtung zum Anlegen einer Spannung zur Durchführung des elektrochemischen Metallisierungsprozesses. Dieser Prozess wird mittels der Spülflüssigkeit durchgeführt, während die Doppeldiaphragmastruktur an der Negativform 86 anliegt.

Während bei einem üblichen Doppeldiaphragmaprozess bei Anlage der Diaphragmen an der Negativform ein teurer und aufwändiger Binderaktivierungsschritt durchgeführt wird, wird bei dem hier dargestellten Herstellprozess eine Metallisierung durchgeführt, wodurch gleichzeitig eine Fixierung als auch eine Metallisierung erfolgt.

In der Fig. 11 ist ein weiteres Ausführungsbeispiel der Vorrichtung 78 gezeigt, bei der das Formwerkzeug 54 nur ein Diaphragma 82 zum Anpressen der textilen Vorform an der Negativform 86 aufweist.

Zwischen der Formoberfläche des Diaphragmas 82 und textilen Vorform 22 und zwischen der Formoberfläche der Negativform 86 und der textilen Vorform 22 kann sich beim Metallisieren auch eine mehr oder weniger durchgängige Metallschicht 87 ausbilden. Insbesondere durch Galvanisieren kann sich auch zwischen der jeweiligen Formfläche und der Preform eine Metallschicht 87 ausbilden; dies könnte zunächst als Nachteil angesehen werden. Es kann aber gerade als Vorteil genutzt werden, da eine leitfähige Schicht bei einer Blitzschutzstruktur ohnehin erforderlich ist. In einer Ausgestaltung des Herstellprozesses wird hierzu z.B. die Dicke dieser metallenen Oberflächenschicht durch Steuerung der Potentiale zwischen Formoberfläche und Preform eingestellt.

Ein weiterer Aspekt ist die Erzeugung bestimmter Muster, z.B. Leiterbahnen, indem bestimmte Bereiche der Formoberfläche leitfähig, andere nicht leitfähig gemacht werden. Fig. 12 zeigt am Beispiel der an der Negativform 86 der Vorrichtung in der Ausgestaltung von Fig. 11 ein derartiges Muster von leitfähigen Bereichen 88 und nichtleitfähigen Bereichen 90. Hierdurch lassen sich an der anliegenden textilen Vorform 22 unterschiedliche Potentiale erzeugen, die ein unterschiedliches Aufbauen von Metallbahnen und Metallschichtbereichen bewirken. Somit können bestimmte Metallmuster auf der textilen Vorform erzeugt werden.

### Bezugszeichenliste

- 10: Bauteil
- 12: CFK-Struktur
- 14: Oberflächenstruktur
- 16: Luftfahrzeug
- 18: Matrix
- 20: Faser (Kohlenstofffaser)
- 22: textile Vorform
- 24: Preform
- 26: erstes Flächengebilde
- 28: zweites Flächengebilde
- 30: drittes Flächengebilde
- 32: erste Lage
- 34: zweite Lage
- 36: dritte Lage
- 40: spröde Harzmatrix
- 42: Blitz
- 44: Leitfähigkeit
- 46: Widerstand
- 48: metallisierte Faser
- 50: lokal verbesserte Leitfähigkeit
- 52: metallisierte textile Vorform
- 54: Formwerkzeug
- 56: Roving
- 58: Metallschicht
- 60: Kontaktstelle
- 62: Riss
- 64: Risswiderstand
- 66: Kavität
- 66a: offene Kavität
- 66b: geschlossene Kavität
- 70: Deckel
- 72: Stützwerkzeug
- 74: Metalllösung
- 76: Spülflüssigkeit
- 78: Vorrichtung
- 80: Metallisierungseinrichtung
- 82: erstes Diaphragma
- 84: zweites Diaphragma
- 86: Negativform
- 87: Metallschicht
- 88: Leitfähiger Bereich
- 90: nichtleitfähiger Bereich

## Patentansprüche

1. Verfahren zum Herstellen eines Bauteils (10) aus faserverstärktem Verbundmaterial, mit der folgenden Reihenfolge von Schritten:
a) Herstellen einer textilen Vorform (22) aus Fasermateriallagen (32, 34, 36),
b) Vorformen und Lagefixieren der textilen Vorform (22) entsprechend der in dem Bauteil (10) erwünschten Endkontur, wobei dieser Schritt b) Formen der textilen Vorform (22) mit einem Formwerkzeug (54) umfasst,
c) Metallisieren der in Schritt a) hergestellten textilen Vorform (22) zum Beschichten einer Faseroberfläche des Fasermaterials der textilen Vorform (22) mit einer Metallschicht (58), während die textile Vorform (22) entsprechend der erwünschten Endkontur an dem Formwerkzeug (54) gehalten wird, und Stabilisieren und/oder Fixieren von Lagen in der vorgeformten textilen Vorform (22) durch die Metallisierung,
d) Imprägnieren der metallisierten textilen Vorform (52) mit Matrixmaterial und Aushärten.

2. Verfahren nach Anspruch 1,
**dadurch gekennzeichnet,**
**dass** Schritt a) wenigstens einen der Schritte umfasst:
a1) Zuschneiden und Drapieren von aus Fasermaterial bestehenden Flächengebilden (26, 28, 30) zum Herstellen der textilen Vorform (22),
a2) Herstellen der textilen Vorform (22) unmittelbar aus Rovings (56),
a3) Flechten von Rovings (56) oder Fasersträngen zum Herstellen der textilen Vorform (22),
a4) Weben von Rovings (56) oder Fasersträngen zum Herstellen der textilen Vorform (22) oder von Flächengebilden (26, 28, 30), aus denen die textile Vorform (22) gemäß Schritt a1) hergestellt wird,
a5) Herstellen der textilen Vorform (22) durch automatisiertes Verlegen von Fasern (20) oder von Faserbandstücken,
a6) Verwenden eines vormetallisierten Fasermaterials zum Herstellen der textilen Vorform (22).

3. Verfahren nach einem der voranstehenden Ansprüche,
**dadurch gekennzeichnet,**
**dass** Schritt b) wenigstens einen der Schritte umfasst:
b1) Einlegen der Vorform (22) in eine Kavität (66) mit wenigstens einer Formfläche zur Fixierung der Vorform (22);
b2) Stützen der Vorform (22) mit einem formenden Stützwerkzeug (72);
b3) Formen der Vorform in einem Einfachdiaphragmaverfahren oder Doppeldiaphragmaverfahren.

4. Verfahren nach einem der voranstehenden Ansprüche,
**dadurch gekennzeichnet,**
**dass** Schritt c) wenigstens einen der Schritte umfasst:
c1) Galvanisieren der textilen Vorform (22),
c2) Eintauchen der in einer offenen Kavität (66a) eines Formwerkzeugs (54) gehaltenen textilen Vorform (22) in einem metallisierenden Tauchbad (68);
c3) Spülen der textilen Vorform (22) in einer geschlossenen Kavität (66b) eines Formwerkzeugs (54) mit einer metallisierenden Spülflüssigkeit (76);
c4) Metallisieren der textilen Vorform, während sie in einem Einfachdiaphragmawerkzeug oder einem Doppeldiaphragmawerkzeug in der gewünschten Form gehalten wird;
c5) Spülen der einseitig oder doppelseitig durch ein Diaphragma gehaltenen textilen Vorform in einer geschlossenen Kavität eines mit wenigstens einer Diaphragma versehenen Formwerkzeug mit einer metallisierenden Spülflüssigkeit (76);

5. Verfahren nach einem der voranstehenden Ansprüche,
**dadurch gekennzeichnet,**
**dass** Schritt c) wenigstens einen der Schritte enthält:
c6) Ausbilden einer Metallschicht zwischen einer Formfläche eines Formwerkzeuges und einer daran gehaltenen textilen Vorform;
c7) Steuern der Dicke einer Metallschicht zwischen einer Formfläche eines Formwerkzeuges und einer daran gehaltenen textilen Vorform durch Steuern eines elektrochemischen Metallisierungsprozesses;
c8) Aufbringen eines vorbestimmten Musters aus Metallbahnen oder Metallbereichen auf die textile Vorform;
c9) Verwenden einer Formoberfläche mit einem vorbestimmten Muster aus leitfähigen und nichtleitfähigen Bereichen zum Aufbringen eines vorbestimmten Musters aus Metallbahnen oder Metallbereichen mittels eines elektrochemischen Metallisierungsverfahrens auf die textile Vorform.

6. Verfahren nach einem der voranstehenden Ansprüche,
**dadurch gekennzeichnet,**
**dass** Schritt a) umfasst:
Herstellen der Preform (24) unter Verwendung von Kohlenstofffasern (20).

7. Vefahren nach einem der voranstehenden Ansprüche.
**dadurch gekennzeichnet,**
**dass** Schritt d) umfasst:
Imprägnieren mit Harz und/oder einer polymerbasierten Matrix (18).

8. Metallisierte textile Vorform (52) zum Herstellen eines Bauteils (10) aus faserverstärktem Verbundmaterial, wobei die textile Vorform (52) entsprechend der in dem Bauteil (10) erwünschten Endkontur vorgeformt ist und
eine erste Lage (32) aus einem ersten textilen Fasergelege und eine zweite Lage (34) aus einem zweiten textilen Fasergelege und eine sowohl die Faseroberfläche des ersten Fasergeleges als auch die Faseroberfläche des zweiten Fasergeleges umgebende gemeinsame Metallschicht (58) umfasst, wobei die gemeinsame Metallschicht (58) das erste Fasergelege und das zweite Fasergelege aneinander fixiert, und weiter
8.1 eine durchgehende Metallschicht an ihrer Oberfläche und/oder
8.2 ein Muster aus Metallbahnen und/oder Metallschichtbereichen auf ihrer Oberfläche umfasst.

9. Bauteil (10) aus faserverstärktem Verbundmaterial, umfassend eine Vorform (22) nach Anspruch 8.

10. Bauteil (10) nach Anspruch 9, ausgebildet als Bauteil (10) eines Luftfahrzeuges (16).

11. Luftfahrzeug (16), umfassend ein Bauteil (10) nach Anspruch 9 oder 10.

12. Vorrichtung zur Herstellung einer metallisierten textilen Vorform (52) nach Anspruch 8 und/oder zur Verwendung in einem Verfahren nach einem der Ansprüche 1 bis 7 und/oder zur Herstellung eines Bauteils nach Anspruch 9 oder 10, umfassend:
ein Formwerkzeug (54) zum Formen und Stützen einer noch unmetallisierten textilen Vorform (22) und
eine Metallisierungseinrichtung (80) zum Metallisieren der in oder an dem Formwerkzeug (54) gehaltenen textilen Vorform (22).

13. Vorrichtung nach Anspruch 12,
**dadurch gekennzeichnet,**
**dass** das Formwerkzeug (54) wenigstens ein Diaphragma zur Bereitstellung einer Formoberfläche aufweist.

14. Vorrichtung nach einem der Ansprüche 12 oder 13,
**dadurch gekennzeichnet,**
**dass** das Formwerkzeug (54) eine mit einem Muster aus leitfähigen und nichtleitfähigen Bereichen versehene Formoberfläche aufweist.

15. Vorrichtung nach einem der Ansprüche 12 bis 14,
**dadurch gekennzeichnet,**
**dass** die Metallisierungseinrichtung (80) eine Einrichtung zum Anlegen einer Spannung zur Durchführung eines elektrochemischen Metallisierungsprozesses aufweist.

## Claims

1. Process of manufacturing a component (10) made of fiber-reinforced composite material, comprising the following sequence of steps:
a) manufacturing a textile preform (22) from layers of fibrous material (32, 34, 36),
b) preforming and ply-fixing the textile preform (22) in accordance with the desired final contour in component (10), wherein said step b) comprising forming the textile preform (22) with a forming tool (54),
c) metallizing the textile preform (22) produced in step a) to coat a fiber surface of the fiber material of the textile preform (22) with a metal layer (58) while holding the textile preform (22) against the forming tool (54) according to the desired final contour, and stabilizing and/or fixing layers in the preformed textile preform (22) by the metallization,
d) impregnating the metallized textile preform (52) with matrix material and curing.

2. Process according to claim 1, **characterized in that** step a) comprises at least one of the steps:
a1) cutting to size and draping of sheet formations (26, 28, 30) consisting of fibrous material for producing the textile preform (22),
a2) manufacturing the textile preform (22) directly from rovings (56),
a3) braiding rovings (56) or fiber strands to produce the textile preform (22),
a4) weaving rovings (56) or fiber strands to produce the textile preform (22) or sheet formations (26, 28, 30) from which the textile preform (22) is produced according to step a1),
a5) manufacturing the textile preform (22) by automated laying of fibers (20) or of fiber sliver pieces,
a6) using a pre-metallized fiber material to produce the textile preform (22).

3. Process according to one of the preceding claims, **characterized in that** step b) comprises at least one of the steps:
b1) placing the preform (22) in a cavity (66) having at least one molding surface for fixing the preform (22);
b2) supporting the preform (22) with a forming support tool (72);
b3) forming the preform in a single-diaphragm process or double-diaphragm process.

4. Process according to any of the preceding claims, **characterized in that** step c) comprises at least one of the steps:
c1) electroplating the textile preform (22),
c2) immersing the textile preform (22) held in an open cavity (66a) of a mold (54) in a metallizing immersion bath (68);
c3) rinsing the textile preform (22) held in a closed cavity (66b) of a mold (54) with a metallizing rinsing liquid (76);
c4) metallizing the textile preform while it is held in the desired shape in a single diaphragm tool or a double diaphragm tool;
c5) rinsing the textile preform held on one or both sides by a diaphragm in a closed cavity of a forming tool provided with at least one diaphragm with a metallizing rinsing liquid (76).

5. Process according to any of the preceding claims, **characterized in that** step c) comprises at least one of the steps:
c6) forming a metal layer between a molding surface of a molding tool and a textile preform held thereon;
c7) controlling the thickness of a metal layer between a molding surface of a molding tool and a textile preform held thereon by controlling an electrochemical metallization process;
c8) applying a predetermined pattern of metal sheets or metal areas to the textile preform;
c9) using a mold surface having a predetermined pattern of conductive and nonconductive areas to apply a predetermined pattern of metal sheets or metal areas to the textile preform by means of an electrochemical metallization process.

6. Process according to any of the preceding claims, **characterized in that** step a) comprises:
Manufacturing the preform (24) using carbon fibers (20).

7. Process according to any one of the preceding claims, **characterized in that** step d) comprises:
Impregnating with resin and/or a polymer-based matrix (18).

8. Metallized textile preform (52) for manufacturing a component (10) of fiber-reinforced composite material, wherein said textile preform (52) being preformed according to the final contour desired in said component (10) and comprising a first layer (32) of a first textile scrim and a second layer (34) of a second textile scrim and a common metal layer (58) surrounding both the fiber surface of said first scrim and the fiber surface of said second scrim, wherein said metal layer (58) fixes the first fiber scrim and the second fiber scrim to each other, and further comprises
8.1 a continuous metal layer on its surface, and/or
8.2 a pattern of metal webs and/or metal layer regions on its surface.

9. Component (10) made of fiber-reinforced composite material, comprising a preform (22) according to claim 8.

10. Component (10) according to claim 9, formed as a component (10) of an aircraft (16).

11. Aircraft (16) comprising a component (10) according to claim 9 or 10.

12. Device for manufacturing a metallized textile preform (52) according to claim 8 and/or for use in a process according to any one of claims 1 to 7 and/or for manufacturing a component according to claim 9 or 10, comprising:
a forming tool (54) for forming and supporting a still unmetallized textile preform (22), and metallizing means (80) for metallizing the textile preform (22) held in or on the forming tool (54).

13. Device according to claim 12, **characterized in that** the forming tool (54) comprises at least one diaphragm for providing a forming surface.

14. Device according to any one of claims 12 or 13, **characterized in that** the forming tool (54) has a forming surface provided with a pattern of conductive and nonconductive areas.

15. Device according to any one of claims 12 to 14, **characterized in that** the metallization device (80) comprises means for applying a voltage to perform an electrochemical metallization process.

## Revendications

1. Procédé de fabrication d'un composant (10) en matériau composite renforcé par des fibres, comprenant la séquence d'étapes suivante :
a) fabrication d'une préforme textile (22) à partir de couches de matériau fibreux (32, 34, 36),
b) préformage et fixation des plis de la préforme textile (22) conformément au contour final souhaité dans le composant (10), dans lequel ladite étape b) comprend le formage de la préforme textile (22) avec un outil de formage (54),
c) la métallisation de la préforme textile (22) produite à l'étape a) pour revêtir une surface fibreuse du matériau fibreux de la préforme textile (22) d'une couche métallique (58) tout en maintenant la préforme textile (22) contre l'outil de formage (54) selon le contour final souhaité, et la stabilisation et/ou la fixation de couches dans la préforme textile (22) par la métallisation,
d) l'imprégnation de la préforme textile métallisée (52) avec un matériau de matrice et le durcissement.

2. Procédé selon la revendication 1, **caractérisé en ce que** l'étape a) comprend au moins une des étapes :
a1) découpage et drapage de formations de feuilles (26, 28, 30) constituées de matériau fibreux pour la production de la préforme textile (22),
a2) la fabrication de la préforme textile (22) directement à partir de rovings (56), a3) des mèches de tressage (56) ou des brins de fibres pour produire la préforme textile (22),
a4) des mèches de tissage (56) ou des brins de fibres pour produire la préforme textile (22) ou les formations en feuilles (26, 28, 30) à partir desquelles la préforme textile (22) est produite selon l'étape a1),
a5) la fabrication de la préforme textile (22) par pose automatisée de fibres (20) ou de morceaux de fibres,
a6) en utilisant un matériau fibreux pré-métallisé pour produire la préforme textile (22).

3. Procédé selon l'une des revendications précédentes, **caractérisé en ce que** l'étape b) comprend au moins une des étapes :
b1) placer la préforme (22) dans une cavité (66) ayant au moins une surface de moulage pour fixer la préforme (22) ;
b2) soutenir la préforme (22) avec un outil de support de formage (72) ;
b3) former la préforme selon un procédé à simple membrane ou un procédé à double membrane.

4. Procédé selon l'une des revendications précédentes, **caractérisé en ce que** l'étape c) comprend au moins une des étapes :
c1) l'électrodéposition de la préforme textile (22),
c2) l'immersion de la préforme textile (22) maintenue dans une cavité ouverte (66a) d'un moule (54) dans un bain d'immersion de métallisation (68) ;
c3) rinçage de la préforme textile (22) maintenue dans une cavité fermée (66b) d'un moule (54) avec un liquide de rinçage de métallisation (76) ;
c4) la métallisation de la préforme textile pendant qu'elle est maintenue dans la forme souhaitée dans un outil à simple membrane ou un outil à double membrane ;
c5) rinçage de la préforme textile maintenue sur un ou deux côtés par un diaphragme dans une cavité fermée d'un outil de formage muni d'au moins un diaphragme avec un liquide de rinçage de métallisation (76).

5. Procédé selon l'une des revendications précédentes, **caractérisé en ce que** l'étape c) comprend au moins une des étapes :
c6) former une couche de métal entre une surface de moulage d'un outil de moulage et une préforme textile maintenue sur celle-ci ;
c7) contrôler l'épaisseur d'une couche métallique entre une surface de moulage d'un outil de moulage et une préforme textile maintenue sur celle-ci en contrôlant un processus de métallisation électrochimique ;
c8) appliquer un motif prédéterminé de feuilles de métal ou de zones métalliques à la préforme textile ;
c9) utiliser une surface de moule ayant un motif prédéterminé de zones conductrices et non conductrices pour appliquer un motif prédéterminé de feuilles de métal ou de zones métalliques à la préforme textile au moyen d'un procédé de métallisation électrochimique.

6. Procédé selon l'une des revendications précédentes, **caractérisé en ce que** l'étape a) comprend :
La fabrication de la préforme (24) en utilisant des fibres de carbone (20).

7. Procédé selon l'une quelconque des revendications précédentes, **caractérisé en ce que** l'étape d) comprend :
L'imprégnation avec une résine et/ou une matrice à base de polymère (18).

8. Préforme textile métallisée (52) pour la fabrication d'un composant (10) en matériau composite renforcé de fibres, dans laquelle ladite préforme textile (52) est préformée selon le contour final souhaité dans ledit composant (10) et comprend une première couche (32) d'une première grille textile et une seconde couche (34) d'une seconde grille textile et une couche métallique commune (58) entourant à la fois la surface des fibres de ladite première grille et la surface des fibres de ladite seconde grille, dans lequel ladite couche métallique (58) fixe la première grille de fibres et la deuxième grille de fibres l'une à l'autre, et comprend en outre
8.1 une couche métallique continue sur sa surface, et/ou
8.2 un motif de bandes métalliques et/ou de régions de couches métalliques sur sa surface.

9. Composant (10) en matériau composite renforcé par des fibres, comprenant une préforme (22) selon la revendication 8.

10. Composant (10) selon la revendication 9, formé comme un composant (10) d'un aéronef (16).

11. Aéronef (16) comprenant un composant (10) selon la revendication 9 ou 10.

12. Dispositif pour la fabrication d'une préforme textile métallisée (52) selon la revendication 8 et/ou pour l'utilisation dans un procédé selon l'une quelconque des revendications 1 à 7 et/ou pour la fabrication d'un composant selon la revendication 9 ou 10, comprenant :
un outil de formage (54) pour former et supporter une préforme textile (22) encore non métallisée, et des moyens de métallisation (80) pour métalliser la préforme textile (22) maintenue dans ou sur l'outil de formage (54).

13. Dispositif selon la revendication 12, **caractérisé en ce que** l'outil de formage (54) comprend au moins un diaphragme pour fournir une surface de formage.

14. Dispositif selon l'une quelconque des revendications 12 ou 13, **caractérisé en ce que** l'outil de formage (54) comporte une surface de formage pourvue d'un motif de zones conductrices et non conductrices.

15. Dispositif selon l'une quelconque des revendications 12 à 14, **caractérisé en ce que** le dispositif de métallisation (80) comprend des moyens pour appliquer une tension afin d'effectuer un processus de métallisation électrochimique.
